# EUROPÄISCHE PATENTSCHRIFT

(11) **EP 0 782 834 B1**
(45) Veröffentlichungstag und Bekanntmachung des Hinweises auf die Patenterteilung: **25.09.2002**
(21) Anmeldenummer: 96116829.1
(22) Anmeldetag: 19.10.1996
(51) Int. Cl.: A47L 9/00, B60B 33/00

(54) **Laufradlagerung und zugehöriges Laufrad**
Running wheel bedding and associated running wheel
Logement pour roue de roulement et roue associée

(30) Priorität: 23.12.1995 DE 29520539 U
(43) Veröffentlichungstag der Anmeldung: 09.07.1997
(73) Patentinhaber: AEG Hausgeräte GmbH, 90429 Nürnberg (DE)
(72) Erfinder: Schmidt, Wolfgang, Dipl.-Ing., 91238 Engelthal (DE); Gundel, Reinhold, 97993 Creglingen (DE)

(56) Entgegenhaltungen:
- DE-U- 8 608 119
- GB-A- 2 230 694

## Beschreibung

Die Erfindung bezieht sich auf eine Lagerunganordnung umfassend eine Laufradlagerung und ein dafür angepaßtes Laufrad und ist insbesondere anwendbar für ein Buglaufrad oder für die Laufräder eines Staubsaugers oder eines Staubsaugerzubehörteils, beispielsweise einer Saugdüse.

Die Laufräder von Staubsaugern oder von Zubehörteilen von Staubsaugern bestehen in der Regel aus einem Material das möglichst wenig Abrollgeräusche verursacht aber vor allem keine Beschädigungen wie Kratzer oder dergleichen auf den Oberflächen hinterläßt, auf denen der Staubsauger oder das Zubehörteil geführt wird.

Es ist ein Laufrad bekannt, das über eine von Gummi umgebene metallene Buchse verfügt, in die eine Metallachse gesteckt wird, wobei die Metallachse beidseitig übersteht und in einer halbkreisförmigen Lagerung einrastet. Die Herstellung dieses Laufrades ist sehr aufwendig. Es ist aber auch nicht möglich, die Metallachse durch ein anderes Material, beispielsweise durch Plastik zu ersetzen, da dieses in der gegebenen Stärke die Belastung nicht aushält und eine Ausführung mit größerem Durchmesser der Achse die Laufeigenschaften des Rades zu sehr beeinträchtigt.

Es ist daher Aufgabe der Erfindung eine Laufradanordnung umfassende eine Laufradlagerung und ein Laufrad zu schaffen, bei der das Laufrad einstückig zumindest aber in einem Spritzvorgang hergestellt werden kann und in der Laufradlagerung gute Laufeigenschaften aufweist.

Diese Aufgabe wird durch eine Laufradanordnung umfassend eine Laufradlagerung gemäß den Ansprüchen 1 und 2 sowie durch ein dafür angepaßtes Laufrad gelöst, wobei eine besonders vorteilhafte Ausführung für die Laufräder eines Staubsaugers darin besteht, daß die Laufradlagerung Bestandteil einer tellerförmigen Laufrolle mit einer senkrechten Drehachse ist, wobei die Laufradlagerung exzentrisch zur senkrechten Drehachse angeordnet ist und die Hohlachse waagrecht in der Laufradlagerung fixiert wird.

Ein Ausführungsbeispiel der Erfindung ist in den Figuren beschrieben. Dabei zeigen:
- Fig. 1: ein Laufrad,
- Fig. 2: die Seitenansicht einer ersten Laufradlagerung mit dem Laufrad
- Fig. 3: einen Querschnitt der Laufradlagerung mit dem Laufrad zur Laufradachse.
- Fig. 4: die Seitenansicht einer zweiten Laufradlagerung mit dem Laufrad

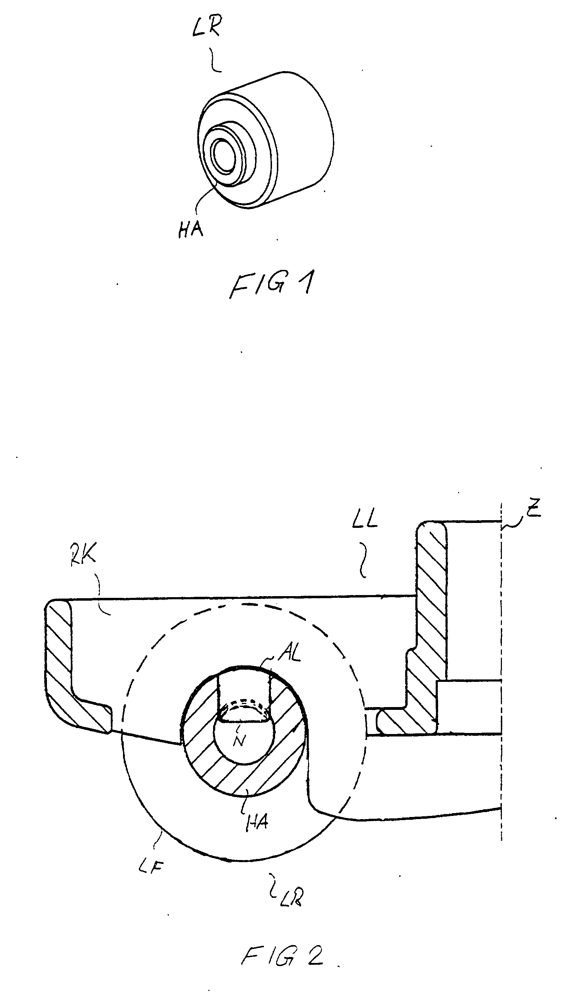

Fig. 1 zeigt ein Laufrad LR mit einer Hohlachse HA, das beispielsweise einstückig aus thermoplastischem Material oder zweistückig hergestellt werden kann. Bei der zweistückigen Herstellung, beispeilsweise aus thermoplastischem Material und thermoplastischem Elastomer läßt sich das Laufrad in einem Verfahrensgang durch Zweikomponenten-Spritztechnik herstellen.

Fig. 2 zeigt eine Seitenansicht des Laufrades LR in einer Laufradlagerung LL, die beispielsweise Teil eines Bugrades sein kann, wobei das Bugrad über eine nicht näher dargestellte Achse Z mit dem Staubsauger verbunden ist.

Die Laufradlagerung LL weist eine halbkreisförmige Fläche AL auf, deren Durchmesser dem Außendurchmesser der Hohlachse HA des Laufrades LR angepaßt ist. Außerdem weist die Laufradlagerung LL ein Teil N auf, das beidseitig von außen in die Hohlachse HA eingreift und so das Laufrad LR vor dem Herausfallen aus der Laufradlagerung LL sichert.

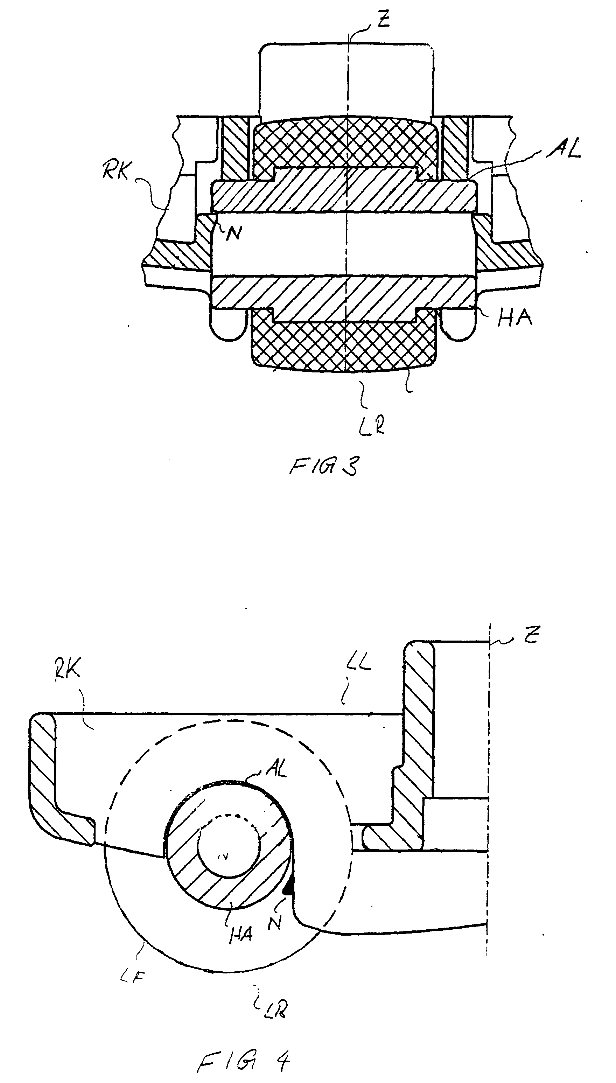

Der Haltemechanismus ist deutlicher in der Darstellung gemäß Fig. 3 zu erkennen. Das Teil N hat eine nasenförmige Ausbuchtung, die in die kreisförmige Hohlachse eingreift und somit das Laufrad LR in der kreisförmigen Fläche AL, das heißt im Achswiderlager hält. Das Teil N bzw. die Befestigung des Teiles N in der Laufradlagerung LL ist so ausgebildet, daß das Laufrad LR von außen in die Laufradlagerung durch definierten Druck eingeschnappt werden kann.

Das Laufrad weist besonders gute Laufeigenschaften auf, wenn als Material für die Hohlachse Polyoxymethylen (POM) verwendet wird.

In Fig. 3 ist ebenfalls erkennbar, daß das Laufrad LR zweistückig hergestellt ist.

Fig. 4 zeigt eine andere Ausbildung, bei der das Teil N bzw. die Nase, die das Laufrad in der Laufradlagerung hält, am Rande der kreisförmigen Fläche AL angebracht ist. Denkbar ist auch eine Ausführungsform, bei der beidseitig zur kreisförmigen Fläche AL solche Nasen N angeordnet sind. Die Fläche AL muß dabei nicht zwangsläufig halbkreisförmig sein, sondern kann sich auch über einen größeren Teilumfang erstrecken.

Das Merkmal, daß die Nase elastisch beweglich ist,ist nicht so zu verstehen, daß die Nase N für sich alleine elastisch beweglich sein muß, sondern die Nase selbst kann auch starr sein, wenn die Laufradlagerung oder Teile davon nachgiebig ausgebildet sind, so daß das Laufrad LR eingeschnappt bzw. eingerastet werden kann.

## Patentansprüche

1. Lagerungsanordnung umfasssend eine Laufradlagerung und ein Laufrad (LR) mit einer beidseitig überstehenden Hohlachse (HA), wobei die Hohlachse (HA) mit ihrem Außenumfang auf einer kreisförmigen Fläche (AL) anliegt und die Lagerung ein Teil (N) aufweist, das in den Innenbereich der Hohlachse (HA) so eingreift, daß die Hohlachse (HA) mit Spiel zur kreisförmigen Anliegefläche (AL) gehalten wird.

2. Lagerungsanordnung umfasssend eine Laufradlagerung und ein Laufrad (LR) mit einer beidseitig überstehenden Hohlachse (HA), wobei die Hohlachse (HA) mit ihrem Außenumfang auf einer kreisförmigen Fläche (AL) anliegt wobei die kreisförmige Fläche (AL) an mindestens einer Stelle eine elastisch bewegliche Nase (N) aufweist, die die Hohlachse in der kreisförmigen Fläche fixiert.

3. Lagerungsanordnung umfasssend eine Laufradlagerung nach , Anspruch 1 oder 2, wobei die Laufradlagerung Bestandteil einer tellerförmigen Laufrolle mit einer senkrechten Drehachse ist, wobei die Laufradlagerung exzentrisch zur senkrechten Drehachse angeordnet ist und die Hohlachse waagrecht in der Laufradlagerung fixiert wird.

## Claims

1. Bedding arrangement comprising a running wheel bedding and a running wheel (LR), having a hollow axle (HA) projecting on both sides, the hollow axle (HA) abutting with its outer circumference a circular face (AL) and the bedding having a part (N), which so engages in the inner region of the hollow axle (HA) that the hollow axle (HA) is held with respect to the circular abutment face (AL) with play.

2. Bedding arrangement comprising a running wheel bedding and a running wheel (LR), having a hollow axle (HA) projecting on both sides, the hollow axle (HA) abutting with its outer circumference a circular face (AL), the circular face (AL) having in at least one place a resiliently movable lug (N), which fixes the hollow axle in the circular face.

3. Bedding arrangement comprising a running wheel bedding according to claim 1 or 2, wherein the running wheel bedding is a component of a plate-shaped running roll with a vertical axis of rotation, the running wheel bedding being disposed eccentrically to the vertical axis of rotation and the hollow axis being fixed horizontally in the running wheel bedding.

## Revendications

1. Agencement de logement comportant un logement pour roue de roulement et une roue de roulement (LR) avec un axe creux (HA) dépassant des deux côtés, où l'axe creux (HA) s'applique avec son pourtour extérieur sur une face circulaire (AL) et le logement présente une partie (N) qui s'engage dans la zone intérieure de l'axe creux (HA) de façon que l'axe creux (HA) soit retenu avec un jeu à la face d'application circulaire (AL).

2. Agencement de logement comportant un logement pour roue de roulement et une roue de roulement (LR) avec un axe creux (HA) dépassant des deux côtés, où l'axe creux (HA) s'applique avec son pourtour extérieur sur une face circulaire (AL), où la face circulaire (AL) présente à au moins un emplacement un ergot élastiquement mobile (N) qui fixe l'axe creux dans la face circulaire.

3. Agencement de logement comportant un logement pour roue de roulement selon la revendication 1 ou 2, où le logement pour roue de roulement est un élément constitutif d'une roue de roulement en forme de disque avec un axe de rotation vertical, où le logement pour 25 roue de roulement est disposé d'une manière excentrée à l'axe de rotation vertical et l'axe creux est fixé horizontalement dans le logement pour roue de roulement.
